Europäisches Patentamt

European Patent Office

Office européen des brevets

(11) Publication number: 0 284 271
A2

# (12) EUROPEAN PATENT APPLICATION

(21) Application number: 88302234.5

(22) Date of filing: 15.03.88

(51) Int. Cl.⁴: **B21D 53/84** , //F16C3/02, F16D1/06

(30) Priority: 26.03.87 JP 70191/87

(43) Date of publication of application:
28.09.88 Bulletin 88/39

(84) Designated Contracting States:
DE FR GB IT NL SE

(71) Applicant: MITSUI & CO., LTD.
2-1, Ohtemachi 1-chome
Chiyoda-ku Tokyo 100(JP)

Applicant: Kokan Kako Co. Ltd.
15-12 Fukuura 2-chome Kanazawa-ku
Yokohama-shi(JP)

(72) Inventor: Nakamura, Masanobu
10-2, Shichirigahama Higashi 2-chome
Kamakura-shi Kanagawa-ken(JP)

(74) Representative: Carpenter, David et al
MARKS & CLERK Alpha Tower Suffolk Street
Queensway
Birmingham B1 1TT(GB)

(54) Manufacture of gear shafts.

(57) A method of manufacturing gear shafts comprising introducing a hollow section of a shaft member 1A into the bore 5 of a separately formed gear member 3 and expanding the hollow section of the shaft member within the bore 5 to fix the shaft member 1A to the gear 3.

FIG.1

EP 0 284 271 A2

## MANUFACTURE OF GEAR SHAFTS

This invention relates to the manufacture of a gear shaft for use for example in a transmission of an automobile or the like, and to a gear shaft manufactured by the method.

It is known to manufacture a gear shaft used for example in a variable speed transmission mechanism of an automobile, by securing transmission gears to both ends of a solid shaft. It is also known to manufacture gear shafts of this type by cutting a metal rod to form an integral shaft and gears; to form an integral shaft and gears by either casting or forging, and then grinding the surface thereof to form gear teeth on the outer periphery of the gear section of the integral structure; and a method involving welding gears onto both ends of a solid shaft. These conventional manufacturing methods however have the following defects.

The method of cutting a cylindrical rod to form a shaft and gears tends to waste material and to be labour and time intensive and is therefore inefficient. The casting/forging method is uneconomical as it necessitates the formation of the shaft from material which has properties suitable for gears.

In case of welding gears onto a shaft, the metal surrounding welding points tends to become softened and thus an additional corrective process is needed to minimise the risk of bending or other in use damage in the softened regions. Thus the number of manufacturing steps is increased as is the risk of deterioration in the performance of the material.

It is an object of the present invention to minimise the above problems and to provide a method of manufacturing a gear shaft efficiently in mass production at low cost.

In accordance with the present invention there is provided a method of manufacturing a gear shaft comprising steps of engaging a centre bore of a toothed gear member over the outer periphery of a hollow region of a shaft member, and enlarging the diameter of said hollow region of the shaft member to engage the wall of the bore of the gear member so as to secure the gear member in position on the shaft member.

Desirably said shaft member is tubular.

Alternatively only that region of the shaft member which is to be received in the gear member is hollow.

Conveniently said gear member comprises a predetermined length of material cut from an elongate cylindrical member the outer surface of which is formed with axially continuous angularly spaced gear teeth, said predetermined length being chosen to provide a gear of suitable axial dimension.

Desirably either the outer peripheral surface of said region of the shaft member or the surface of the bore of the gear member is provided with surface irregularities.

Conveniently said region of the shaft member is expanded by forcing fluid into the hollow section.

Preferably hollow regions not to be expanded are external supported against expansion by one or more dies.

Alternatively said region of the shaft member is expanded by the introduction therein of a rod or mandrel.

The invention further resides in a gear shaft manufactured by the above method.

As gears are separately manufactured in advance and fixed to the shaft by caulking, gears and shafts can be made respectively from optimal materials.

One example of the present invention is illustrated in the accompanying drawings wherein:-

Figure 1 is a sectional view of a gear shaft;

Figure 2 is a perspective view to show an example of manufactured gears for use in the shaft construction shown in Figure 1; and

Figure 3 is a front view, partly in section, of a modification of the gear shaft shown in Figure 1.

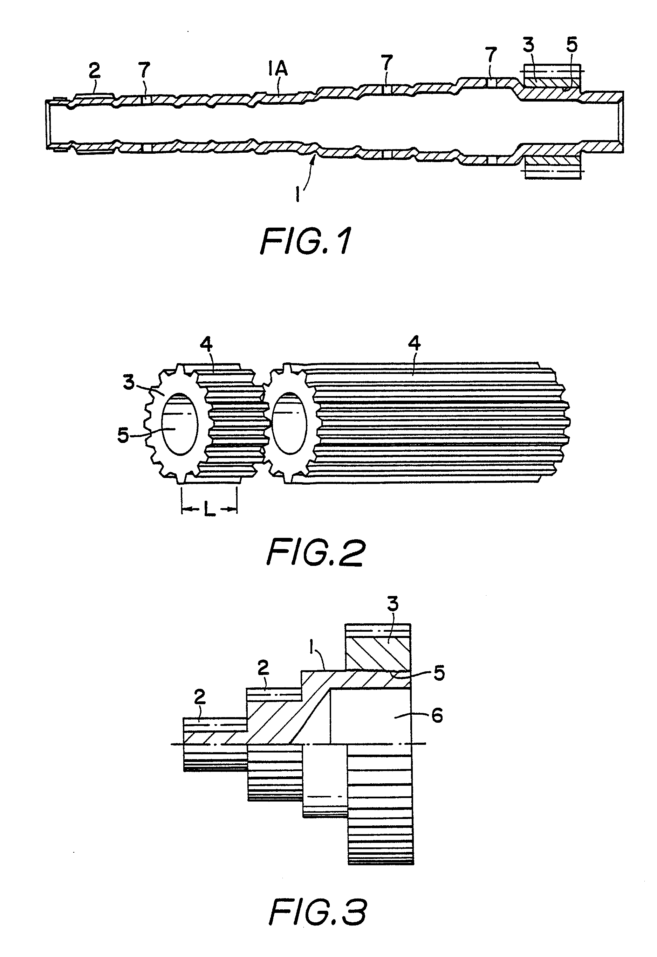

Referring now to the drawings, Figure 1 shows, in section, an embodiment of a variable-speed gear shaft manufactured according to this invention. In this embodiment, a tubular metal member 1A is used to form a shaft 1, the outer peripheral surface of the member 1A being ground adjacent one axial end to form the teeth of the smaller diameter one 2 of the two gears of the gear shaft. The other gear 3, which is of larger diameter, is fixed on the outer periphery of the member 1A adjacent its other end.

The gear 3 may be made by forming axially continuous and angularly spaced teeth 4 on the outer peripheral surface of an elongate cylindrical member as shown in Figure 2, and then cutting the cylindrical member to a portion of predetermined length L which has an appropriate thickness (axial dimension) for use as the gear 3.

The gear shaft is constructed by fitting a centre bore 5 of the gear 3 over the appropriate end region of the tubular member 1A, and applying pressure to the interior of the member 1A at least in that region with the bore 5 of the gear 3, to expand the member 1A within the bore 5 so as to grip the gear 3 and so secure the gear 3 in place on the shaft 1.

Fixing of the gear 3 may be achieved by the bulging method which comprises supporting the exterior of the member 1A, except in those locations where expansion is required, for example by means of an appropriately shaped die or dies, and forcing pressurized fluid into the member 1A, so enlarging the diameter of the member in the unsupported region, expanding the unsupported region onto the internal peripheral surface of the bore 5 of the gear 3. Fixing may alternatively be achieved by forcing a rod or mandrel into the end region of the member 1A to enlarge the diameter of the member only at the end region thereof within the bore 5.

Prior to fitting the gear 3 onto the member 1A, the internal surface of the bore 5 or the outer peripheral surface of the appropriate region of the member 1A may be provided with knurling, splines, threads or irregularities of other forms so as further to enhance the grip between the member 1A and the gear 3 after expansion of the member 1A within the bore 5. Moreover, either the gear or the tubular member, whichever is not provided with surface irregularities, may be made to have a hardness less than that of the other component so as further to enhance the connection.

The shaft 1 is not necessarily tubular throughout its length as is the case with member 1A, but may be a structure of the form shown in Figure 3 which has a hollow section 6 only at the location which is to be expanded to engage within the bore of the gear 3.

It will be appreciated that if desired gears may be secured at both ends of a shaft in the manner described above.

As described above the or each gear is secured to the shaft by expansion of an appropriate region of the shaft. Thus this method therefore can use any materials arbitrarily. Compared to the known methods, the above method utilizes materials more efficiently without waste, and therefore is highly economical.

Unlike the known welding method, the above described manufacturing method does not heat the components and thus avoids deterioration of materials and therefore does not necessitate an additional correction process. This method can therefore achieve a productivity higher than the known methods. 78

## Claims

1. A method of manufacturing a gear shaft comprising steps of engaging a centre bore of a toothed gear member over the outer periphery of a hollow region of a shaft member, and enlarging the diameter of said hollow region of the shaft member to engage the wall of the bore of the gear member so as to secure the gear member in position on the shaft member.

2. A method as claimed in Claim 1 wherein said shaft member is tubular.

3. A method as claimed in Claim 1 wherein only that region of the shaft member which is to be received in the gear member is hollow.

4. A method as claimed in any one of Claims 1 to 3 wherein said gear member comprises a predetermined length of material cut from an elongate cylindrical member the outer surface of which is formed with axially continuous angularly spaced gear teeth, said predetermined length being chosen to provide a gear of suitable axial dimension.

5. A method as claimed in any one of Claims 1 to 4 wherein either the outer peripheral surface of said region of the shaft member or the surface of the bore of the gear member is provided with surface irregularities.

6. A method as claimed in any one of the preceding claims wherein said region of the shaft member is expanded by forcing fluid into the hollow section.

7. A method as claimed in Claim 6 wherein hollow regions not to be expanded are external supported against expansion by one or more dies.

8. A method as claimed in any one of Claims 1 to 5 wherein said region of the shaft member is expanded by the introduction therein of a rod or mandrel.

9. A method of manufacturing a gear shaft substantially as hereinbefore described with reference to Figures 1 and 2 of the accompanying drawings.

10. A method of manufacturing a gear shaft substantially as hereinbefore described with reference to Figures 2 and 3 of the accompanying drawings.

11. A gear shaft manufactured by the method claimed in any one of the preceding claims.

FIG.1

FIG.2

FIG.3